# EUROPÄISCHE PATENTSCHRIFT

(11) **EP 1 915 544 B1**
(45) Veröffentlichungstag und Bekanntmachung des Hinweises auf die Patenterteilung: **10.06.2015**
(21) Anmeldenummer: 06762721.6
(22) Anmeldetag: 20.07.2006
(51) Int. Cl.: F16C 33/30, C21D 1/78

(54) **WÄLZLAGERUNG**
ANTIFRICTION MOUNTING
SYSTEME DE PALIER A ROULEMENT

(30) Priorität: 30.07.2005 DE 102005035837
(43) Veröffentlichungstag der Anmeldung: 30.04.2008
(73) Patentinhaber: Aktiebolaget SKF, 415 50 Göteborg (SE)
(72) Erfinder: BAOZHU, Liang, 97456 Dittelbrunn (DE); HOCH, Paul-Gerhard, 97456 Dittelbrunn (DE); NIERLICH, Wolfgang, 97424 Schweinfurt (DE)
(74) Vertreter: Kohl, Thomas
(86) Internationale Anmeldenummer: PCT/EP2006/007129
(87) Internationale Veröffentlichungsnummer: WO 2007/014642

(56) Entgegenhaltungen:
- EP-A- 1 293 689
- EP-A2- 1 070 760
- DE-A1- 4 434 324
- DE-A1- 10 016 316
- DE-A1- 10 216 492
- DE-A1- 19 909 709

## Beschreibung

Die Erfindung betrifft ein Fahrzeugnebenaggregat mit einer wälzlagerten Welle, die zum Antrieb durch einen Hauptantrieb des Fahrzeugs vorgesehen ist, mit wenigstens einer Laufbahnoberfläche für Wälzkörper der Wälzlagerung.

In den vergangenen Jahren sind insbesondere bei Nebenaggregaten von Fahrzeugen, wie beispielsweise Drehstromgeneratoren, die durch den Kraftfahrzeugmotor angetrieben werden, eine Verringerung der Größe und des Gewichts sowie eine Verbesserung der Leistung einer Wälzlagerung der Welle des Nebenaggregats in starkem Maße fortgeschritten. Damit einhergehend ergeben sich aber zunehmend Probleme bei derartigen Wälzlagerungen, die zu einer vorzeitigen Schädigung der Wälzlagerungen führen.

Aus der DE 100 16 316 A1 ist ein Wälzlager bekannt, welches in einem Turbolader, Lüftermotor oder Reinigungsmotor für ein Fahrzeug eingebaut ist, deren stählerne Wälzkörperelemente eine dichte Nitridschicht aufweisen, wobei der Anteil an Bainit bevorzugt minimiert ist.

Eine Aufgabe der Erfindung ist es daher, ein verbessertes Fahrzeugnebenaggregat mit einer wälzlagerten Welle, die zum Antrieb durch einen Hauptantrieb des Fahrzeugs vorgesehen ist, mit wenigstens einer Laufbahnoberfläche für Wälzkörper der Wälzlagerung zu schaffen, so dass die Wälzlagerung als Eigenschaften eine einfache und damit kostengünstige Herstellbarkeit, eine hohe Belastbarkeit und eine lange Lebensdauer miteinander vereint.

Die Aufgabe wird durch den Gegenstand des Patentanspruchs 1 gelöst. Vorteilhafte Ausgestaltungen sind in den Unteransprüchen beschrieben.

Die Erfindung beruht dabei auf der Erkenntnis, dass insbesondere bei einer Koppelung der Welle des Nebenaggregats mit dem Hauptantrieb über einen Riemen oder Kette hoch dynamisch schwingende, manchmal auch stoßartige Belastungen an die Wälzlagerung übertragen werden, welche eine Rissbildung bzw. eine Rissfortpflanzung im Wälzlagerungsmaterial beschleunigen, so dass es zu einem vorzeitigen Ausfall der Wälzlagerung kommen kann. Dadurch, dass nunmehr wenigstens besagte Schicht ein bainitisches Gefüge aufweisend ausgebildet ist - wobei in der Regel das gesamte die Schicht beinhaltende Wälzlagerelement, also insbesondere ein Wälzlageraußenring, aber auch ein Wälzlagerinnenring vollständig bainitisch durchgehärtet sein werden, also besagtes Wälzlagerelement als ganzes ein Bainitgefüge aufweisend ausgebildet ist -, weist die Schicht insbesondere aufgrund der Zähigkeit des Bainitgefüges beispielsweise gegenüber einer vergleichbaren Schicht mit Martensitgefüge hinsichtlich einer Rissbildung und/oder Rissfortpflanzung mit Vorteil einen erhöhten Widerstand auf. Gleichzeitig geht aber mit dem bainitischen Gefüge einher, dass in der Schicht Druckeigenspannungen vorherrschen, die beispielsweise gegenüber einer Schicht aus einem Stahl mit martensitischer Struktur, die unterhalb der Laufbahnoberfläche Zugeigenspannungen aufweist, zusätzlich mit Vorteil die Unempfindlichkeit hinsichtlich vorgenannter Rissbildung und Rissfortpflanzung erhöhen. Dadurch, dass besagte Zähigkeit und nebenher auch besagte Druckeigenspannungen durch das bainitische Gefüge erzielt werden, wird infolge der Einfachheit eines Härteverfahrens bzw. eines Wärmebehandlungsprozesses zum Erzeugen vorgenannten bainitischen Gefüges gleichzeitig eine einfache und damit kostengünstige Herstellbarkeit erzielt.

In einer besonders vorteilhaften Ausgestaltung weist die Schicht von der Laufbahnoberfläche ausgehend wenigstens eine Tiefe von in etwa 100 µm auf und die Druckeigenspannungen innerhalb besagter Schicht sind größer in etwa 50 MPa.

Weitere Vorteile, Merkmale und Einzelheiten der Erfindung ergeben sich aus dem im folgenden beschriebenen Ausführungsbeispiel der Erfindung.

Eine Welle samt einem Rotor einer Lichtmaschine eines Fahrzeugs ist über zwei Kugellager mit einem Stator der Lichtmaschine verbunden. Dabei wird die Welle der Lichtmaschine über einen Riemen bzw. eine Kette vom Hauptantrieb des Fahrzeugs, beispielsweise einem Verbrennungsmotor, angetrieben. Jedes der Kugellager umfasst dabei einen auf der Welle angeordneten Innenring sowie einen mit dem Stator verbundenen Außenring, wobei zwischen den beiden Lagerringen die als Kugeln ausgebildeten Wälzkörper angeordnet sind. Bei einem Drehen der Welle rollen die Kugeln auf einer Laufbahn des Innenrings und einer Laufbahn des Außenrings ab.

Der Innen- und der Außenring sind dabei beispielsweise aus einem 3M-Stahl hergestellt, der durch 0,9 bis 1,0 Gew.-% Kohlenstoff, 1,3 bis 1,5 Gew.-% Chrom, 0,25 bis 0,45 Gew.-% Mangan, 0,20 bis 0,23 Gew.-% Molybdän, < 0,15 Gew.-% Silizium, 0,02 bis 0,05 Gew.-% Aluminium, max. 20 ppm Titan, max. 8 ppm Sauerstoff, max. 0,15 Gew.-% Phosphor und max. 0,01 Gew.-% Schwefel gekennzeichnet ist. In anderen Ausführungen können aber auch andere Wälzlagerstähle und/oder Vergütungsstähle eingesetzt werden.

Durch die Kopplung der Welle Lichtmaschine mit dem Hauptantrieb über einen Riemen oder Kette werden hoch dynamisch schwingende, manchmal auch stoßartige Belastungen an die Kugellager übertragen, was eine Rissbildung bzw. eine Rissfortpflanzung im Lagermaterial beschleunigen kann. Um die Empfindlichkeit der Kugellager gegen besagte Rissbildung und Rissfortpflanzung stark zu reduzieren und damit ihre Lebensdauer entsprechend zu erhöhen, sind der Innenring und der Außenring im Rahmen einer Wärmebehandlung bainitisch gehärtet. Dazu werden besagte Lagerringe bei ca. 220 bis 240 °C für mehrere Stunden, insbesondere 2 bis 6 Stunden, temperiert, so dass diffusionsgesteuert sich das Gefüge zu Bainit umwandelt. Das daraus entstehende im wesentlichen bainitische Gefüge hat dabei einen Restaustenitgehalt von in etwa kleiner gleich 3 %. Näheres zur Wärmebehandlung ist beispielsweise in der DE 102 16 792 A1 beschrieben.

Einhergehend mit der vorausgehend beschriebenen Wärmebehandlung und dem sich einstellenden bainitischen Gefüge wird insbesondere aufgrund der Zähigkeit des Bainitgefüges hinsichtlich einer Rissfortpflanzung mit Vorteil ein erhöhter Widerstand erzielt. Nebenher werden dadurch weiterhin wenigstens in einer Schicht, ausgehend von der Laufbahnoberfläche der Lagerringe bis hin zu einer Tiefe von in etwa 100 µm Druckeigenspannungen von mindestens in etwa 50 MPa bis hin zu in etwa 250 MPa erzeugt, wobei die Druckeigenspannungen zu einer Unempfindlichkeit gegen Rissbildung und Rissfortpflanzung weiter mit beitragen. Vorgenanntes stellt einen besonderen Vorteil beispielsweise gegenüber durchgehärteten Stählen mit martensitischer Struktur dar, bei denen eine derartige Zähigkeit nicht gegeben ist und bei denen unter der Laufbahnoberfläche Zugeigenspannungen vorherrschen, die die Wälzlagerung empfindlich hinsichtlich Rissbildung und Rissfortpflanzung machen.

In anderen Ausführungsformen können zusätzlich zu dem vorausgehend beschriebenen Einstellen eines bainitischen Gefüges eine Strahlbehandlung der Laufbahnoberflächen erfolgen und/oder die Laufbahnoberflächen anderweitig veredelt werden, insbesondere durch Carbonitrieren oder durch eine diamantähnliche Beschichtung. In wiederum anderen Ausführungsformen kann es sich anstelle der Lichtmaschine um eine Anlasser-Lichtmaschinen-Einheit und/oder eine Anlasser-Lichtmaschine-Elektromotor-Einheit handeln. Insbesondere sind Wälzlagerungen mit besagtem bainitischen Gefüge bei allen riemen- und/oder kettenangetriebenen Nebenaggregaten in Fahrzeugen von Vorteil, da die derart ausgebildeten Wälzlagerungen den hoch dynamisch schwingenden und manchmal auch stoßartigen Belastungen besser widerstehen und damit ein frühzeitiger Lagerausfall in besagten Anwendungen verhindert wird.

## Patentansprüche

1. Fahrzeugnebenaggregat mit einer wälzgelagerten Welle, die zum Antrieb durch einen Hauptantrieb des Fahrzeugs vorgesehenen ist, mit wenigstens einer Laufbahnoberfläche für Wälzkörper der Wälzlagerung, wobei wenigstens eine Schicht unmittelbar unter der Laufbahnoberfläche mit einem bainitischen Gefüge ausgebildet ist und wobei ein gesamtes die Schicht beinhaltendes Wälzlagerelement vollständig bainitisch durchgehärtet ist.

2. Fahrzeugnebenaggregat nach Anspruch 1, wobei die Schicht mit Druckeigenspannungen ausgebildet ist.

3. Fahrzeugnebenaggregat nach Anspruch 2, wobei die Druckeigenspannungen größer in etwa 50 MPa sind.

4. Fahrzeugnebenaggregat nach einem der Ansprüche 2 oder 3, wobei die Druckeigenspannungen kleiner in etwa 250 MPa sind.

5. Fahrzeugnebenaggregat nach einem der Ansprüche 1 bis 4, wobei die Schicht von der Laufbahnoberfläche ausgehend wenigstens eine Tiefe von größer in etwa 100 µm aufweist.

6. Fahrzeugnebenaggregat nach einem der Ansprüche 1 bis 5, wobei das bainitische Gefüge durch ein entsprechendes Wärmebehandlungsverfahren bzw. Härteverfahren hergestellt ist.

7. Fahrzeugnebenaggregat nach Anspruch 6, wobei das Verfahren ein Temperieren mit in etwa 220 bis 240°C über eine Zeitdauer von in etwa 2 bis 6 Stunden umfasst.

8. Fahrzeugnebenaggregat nach einem der Ansprüche 1 bis 7, wobei wenigstens in der Schicht ein Restaustenitgehalt kleiner in etwa 3 % ist.

9. Fahrzeugnebenaggregat nach einem der Ansprüche 1 bis 8, wobei die Schicht aus einem Wälzlager- oder Vergütungsstahl hergestellt ist.

10. Fahrzeugnebenaggregat nach einem der Ansprüche 1 bis 9, wobei die Welle des Nebenaggregats über eine Kette oder einen Riemen mit dem Hauptantrieb gekoppelt ist.

11. Fahrzeugnebenaggregat nach einem der Ansprüche 1 bis 10, wobei das Nebenaggregat eine Lichtmaschine, eine Anlasser-Lichtmaschinen-Einheit und/oder eine Anlasser-Lichtmaschine-Elektromotor-Einheit umfasst.

## Claims

1. Vehicle ancillary unit having a shaft which is mounted on rolling bearings and which is intended to be driven by a main drive of the vehicle, with at least one raceway surface for rolling bodies of the rolling bearing arrangement, wherein at least one layer is formed directly beneath the raceway surface with a bainitic microstructure, and wherein an entire rolling bearing element which contains the layer is fully hardened in bainitic form.

2. Vehicle ancillary unit according to Claim 1, wherein the layer is formed with residual compressive stresses.

3. Vehicle ancillary unit according to Claim 2, wherein the residual compressive stresses are greater than approximately 50 MPa.

4. Vehicle ancillary unit according to either of Claims 2 and 3, wherein the residual compressive stresses are smaller than approximately 250 MPa.

5. Vehicle ancillary unit according to one of Claims 1 to 4, wherein the layer has at least a depth of greater than approximately 100 µm proceeding from the raceway surface.

6. Vehicle ancillary unit according to one of Claims 1 to 5, wherein the bainitic microstructure is produced by an appropriate heat treatment process or hardening process.

7. Vehicle ancillary unit according to Claim 6, wherein the process comprises controlling the temperature at approximately 220 to 240°C over a period of time of approximately 2 to 6 hours.

8. Vehicle ancillary unit according to one of Claims 1 to 7, wherein a residual austenite content at least in the layer is less than approximately 3%.

9. Vehicle ancillary unit according to one of Claims 1 to 8, wherein the layer is produced from a rolling bearing steel or heat-treatable steel.

10. Vehicle ancillary unit according to one of Claims 1 to 9, wherein the shaft of the ancillary unit is coupled to the main drive via a chain or a belt.

11. Vehicle ancillary unit according to one of Claims 1 to 10, wherein the ancillary unit comprises an alternator, a starter-alternator unit and/or a starter-alternator-electric motor unit.

## Revendications

1. Organe auxiliaire de véhicule, comprenant un arbre supporté sur palier à roulement qui est prévu pour l'entraînement par un entraînement principal du véhicule, comprenant au moins une surface de chemin de roulement pour des corps de roulement du support sur palier à roulement, au moins une couche étant réalisée directement en dessous de la surface du chemin de roulement avec une structure bainitique et un élément de palier à roulement complet contenant la couche étant complètement durci dans la masse sous forme bainitique.

2. Organe auxiliaire de véhicule selon la revendication 1, dans lequel la couche est réalisée avec des contraintes propres de compression.

3. Organe auxiliaire de véhicule selon la revendication 2, dans lequel les contraintes propres de compression sont supérieures à environ 50 MPa.

4. Organe auxiliaire de véhicule selon l'une quelconque des revendications 2 ou 3, dans lequel les contraintes propres de compression sont inférieures à environ 250 MPa.

5. Organe auxiliaire de véhicule selon l'une quelconque des revendications 1 à 4, dans lequel la couche présente au moins une profondeur supérieure à environ 100 µm à partir de la surface du chemin de roulement.

6. Organe auxiliaire de véhicule selon l'une quelconque des revendications 1 à 5, dans lequel la structure bainitique est fabriquée par un procédé de traitement thermique correspondant ou par un procédé de durcissement.

7. Organe auxiliaire de véhicule selon la revendication 6, dans lequel le procédé comprend une thermorégulation à environ 220 à 240°C pendant une période d'environ 2 à 6 heures.

8. Organe auxiliaire de véhicule selon l'une quelconque des revendications 1 à 7, dans lequel une teneur en austénite résiduelle au moins dans la couche est inférieure à environ 3 %.

9. Organe auxiliaire de véhicule selon l'une quelconque des revendications 1 à 8, dans lequel la couche est fabriquée à partir d'un acier pour palier à roulement ou d'un acier trempé et revenu.

10. Organe auxiliaire de véhicule selon l'une quelconque des revendications 1 à 9, dans lequel l'arbre de l'organe auxiliaire est accouplé à l'entraînement principal par le biais d'une chaîne ou d'une courroie.

11. Organe auxiliaire de véhicule selon l'une quelconque des revendications 1 à 10, dans lequel l'organe auxiliaire comprend un alternateur, une unité démarreur-alternateur et/ou une unité démarreur-alternateur-moteur électrique.
